# EUROPEAN PATENT SPECIFICATION

(11) **EP 4 501 187 B1**
(45) Date of publication and mention of the grant of the patent: **28.01.2026**
(21) Application number: 24190969.6
(22) Date of filing: 25.07.2024
(51) Int. Cl.: A47J 43/07

(54) **COUNTERTOP APPLIANCE WITH PHYSICAL AND REMOTE MOTOR CONTROL**
ARBEITSPLATTENGERÄT MIT PHYSISCHER UND FERNGESTEUERTER MOTORSTEUERUNG
APPAREIL DE COMPTOIR AVEC COMMANDE DE MOTEUR PHYSIQUE ET À DISTANCE

(30) Priority: 31.07.2023 US 202363529892 P; 06.06.2024 US 202418735650
(43) Date of publication of application: 05.02.2025
(73) Proprietor: Whirlpool Corporation, Benton Harbor, MI 49022 (US)
(72) Inventor: Hill, Eric A., Benton Harbor, MI 49022 (US); Hughes, Richard J., Benton Harbor, MI 49022 (US); Mock, Brandon T., Benton Harbor, MI 49022 (US); Rutter, Ryan James, Benton Harbor, MI 49022 (US)
(74) Representative: PGA S.p.A., Milano, Succursale di Lugano

(56) References cited:
- GB-A- 2 525 398
- US-A1- 2022 386 817
- US-B2- 10 743 550

## Description

### TECHNICAL FIELD

The invention relates to a small appliance, such as a stand mixer, that has a motor speed actuator that is movable physically by a user or by remote control by a handheld device or home automation device.

### BACKGROUND

Small countertop or kitchen appliances, such as stand mixers, blenders, or food processors by example, have become ubiquitous in both a home and commercial kitchen setting. In the example of a stand mixer, one generally comprises a base having a lower extension platform on which a mixing bowl is typically mounted or placed and an upper portion which houses a motor housing connected to a motor housing. The motor housing is typically movable with respect to the base between a lowered position in which a rotatable attachment mount is juxtaposed with a mixing bowl placed upon the lower extension platform and an upper position where the rotatable mount is moved away from the mixing bowl to allow ingredients to be placed within the mixing bowl. Alternatively, the mixing bowl can be liftable with respect to the rotatable mount so that the mixing bowl can be lifted toward and away from it.

One desirable feature of countertop appliances such as stand mixers, food processors and blenders, is the number of convenient and helpful food preparation features that they can perform. However, each of these typical countertop appliances requires a user to be physically present next to the countertop appliance for controlling operating criteria of the countertop appliance, such as motor speed.

US2022/386817A1 discloses a coutertop appliance according to the prior art.

### BRIEF SUMMARY

The invention is defined by the appended claims 1 and 15. Further embodiments of the invention are defined in the dependent claims.

In one aspect of the invention a countertop appliance comprises a base having a lower surface for resting on a work surface and an upper portion, the lower surface having an extension upon which a mixing bowl can be placed for food preparation operations performed by the countertop appliance. A housing can comprise a rotatable attachment mount and a motor can have an output shaft operably connected to the attachment mount and configured to provide rotational motion to the attachment mount when powered. An actuator can be mounted to at least one of the base or the housing and operably interconnected with the motor, the actuator having a handle movable along a path that is accessible from the exterior of the countertop appliance by a user and a positioning assembly configured to impart movement to the handle of the actuator along the path upon receipt of a position signal by the positioning assembly. A wireless communication interface can be operably interconnected with the positioning assembly adapted to provide the position signal to the positioning assembly. Upon receipt of the position signal by the positioning assembly or physical movement of the handle of the actuator by a user, the handle of the actuator can be moved between a plurality of positions to generate a signal from the actuator to the motor representative of a speed of the output shaft of the motor.

Various embodiments of the invention are also contemplated without departing from the scope of this invention which is defined by the appended claims. The wireless communication interface can be at least one of Wi-Fi or Bluetooth communication protocols. The handle of the actuator can comprise a knob. The path along which the handle of the actuator moves can be linear or arcuate.

A tactile confirmation interface having at least one visual indicator thereon that is accessible by a user from the exterior of the countertop appliance can be operably interconnected between the actuator and the motor. The visual indicator can be controllable between a first inactive state and a second active state. A signal interrupt that prevents any position signals from affecting the position of the handle along the elongated housing can be provided when the visual indicator of the tactile interface is set to the second active state. The confirmation interface can be configured to return the visual indicator to the first inactive state upon receipt of a first gesture from a user and any pending position signals are processed by the actuator. The confirmation interface can be configured to return the visual indicator to the first inactive state upon receipt of a second gesture from a user and any pending position signals are canceled by the actuator.

The actuator can comprise an elongated housing having a first end and a second end and the handle is mounted for movement to the elongated housing between the first and second ends thereof. The handle can include at least one of a flange and a slot, and the elongated housing can include the other of the flange and a slot, and the flange can be mounted for slidable movement within the slot to define the path. The positioning assembly can comprise a positioning motor controllable by the position signal, and an output of the motor can be operably interconnected to the handle of the actuator to impart movement thereto representative of the position signal.

The output of the positioning motor can further comprise a gear, the elongated housing can comprise a belt mounted for movement imparted from rotation of the gear by the motor, and movement of the belt can impart slidable movement of the handle with respect to the elongated housing. The output of the positioning motor can further comprise a gear rotatable by the positioning motor and the handle can further comprise a rack gear engaged with the gear of the positioning motor. Rotation of the positioning motor gear can impart lateral movement of the handle with respect to the elongated housing. The output of the positioning motor can further comprise a worm gear extending along the general direction of the elongated housing and the handle can further comprise a gear engaged with the worm gear. Rotation of the positioning motor worm gear can impart lateral movement of the handle with respect to the elongated housing.

In another aspect of the invention, a countertop appliance can comprise a base having a lower surface for resting on a work surface and an upper portion. The lower surface can have an extension upon which a mixing bowl can be placed for food preparation operations performed by the countertop appliance. A housing therefor can comprise a rotatable attachment mount, movably connected to a portion of the base between at least a first position wherein the attachment mount is juxtaposed with the extension on the lower surface of the base, and a second position wherein the attachment mount is raised away from the extension on the lower surface of the base. A motor can have an output shaft operably connected to the attachment mount and can be configured to provide rotational motion to the attachment mount when powered. An actuator can be mounted to at least one of the base or the housing and operably interconnected with the motor. The actuator can have a handle movable along a path that is accessible from the exterior of the countertop appliance by a user and a positioning assembly configured to impart movement to the handle of the actuator along the path upon receipt of a position signal by the positioning assembly. The actuator can comprise a first end and a second end and the handle can be mounted for movement between the first and second ends thereof. A wireless communication interface can be operably interconnected with the positioning assembly and can be adapted to provide the position signal to the positioning assembly.

Upon receipt of the position signal by the positioning assembly or physical movement of the handle of the actuator by a user, the handle of actuator can move between a plurality of positions to generate a signal from the actuator to the motor representative of a speed of the output shaft of the motor.

Additional embodiments of the invention are also contemplated without departing from the scope of this invention as defined by the appended claims. The positioning assembly can comprise a positioning motor controllable by the position signal, and an output of the motor can be operably interconnected to the handle of the actuator to impart movement thereto representative of the position signal. The output of the positioning motor can further comprise a gear, the elongated housing can comprise a belt mounted for movement imparted from rotation of the gear by the motor, and the belt can impart slidable movement of the handle with respect to the elongated housing. The countertop appliance can comprise a stand mixer and the rotatable accessory mount can be adapted to receive a mixing accessory.

### BRIEF DESCRIPTION OF THE DRAWINGS

In the drawings:
Figure 1 shows a side elevational view of a countertop appliance according to the invention having an operational criteria actuator that is operable by touch by a physical user as well as by remote control using a smartphone device or a home automation device.
Figure 2 is a schematic diagram showing features of the countertop appliance shown in Figure 1 in which a motor for performing food preparation operations is provided with an actuator which can control a feature or operational criteria of the motor, such as motor speed, either by a physical touch by a user or a remote device.
Figures 3A-3B show an example first embodiment of the actuator for the countertop appliance shown in Figures 1-2.
Figures 4A-4B show an example second embodiment of the actuator for the countertop appliance shown in Figures 1-2
Figures 5A-5B show an example third embodiment of the actuator for the countertop appliance shown in Figures 1-2.
Figure 6 shows a side elevational view of a user updating the physical setting of the actuator for the countertop appliance shown in Figures 1-2.
Figure 7A shows a side elevational view of the countertop appliance of Figures 1-2, specifically showing a user updating a virtual representation of the actuator for the countertop appliance on a smartphone device, wherein the smartphone is emitting a signal to the countertop appliance shown in Figures 1-2.
Figure 7B shows an optional stage in which the countertop appliance shows a confirmation interface in an active state, identifying that a signal has been received to alter the operating criteria of the countertop appliance and requesting that a user provide a confirmation of that signal to the countertop appliance.
Figure 7C shows the physical position of the actuator for the countertop appliance moving to the position specified on the remote device.
Figure 8A shows a user emitting a voice command to a home automation device and that home automation device emitting a wireless signal to the countertop appliance shown in Figures 1-2 indicative of a or representative of a new operating criteria setting, such as motor speed, of the countertop appliance shown in Figures 1-2.
Figure 8B shows an optional step in which the received signal as illustrated in Figures 8A causes a confirmation interface to have a visual indicator to a user that a signal representative of a new operating criteria for the countertop appliance, such as motor speed, has been received and a visual indicator shows to a user to provide a confirmation to the countertop appliance shown in Figures 1-2.
Figure 8C shows, following the receipt of a confirmation gesture from the user in Figure 8B, the physical location of the actuator moving to the new requested position for the countertop appliance shown in Figures 1-2.

### DETAILED DESCRIPTION

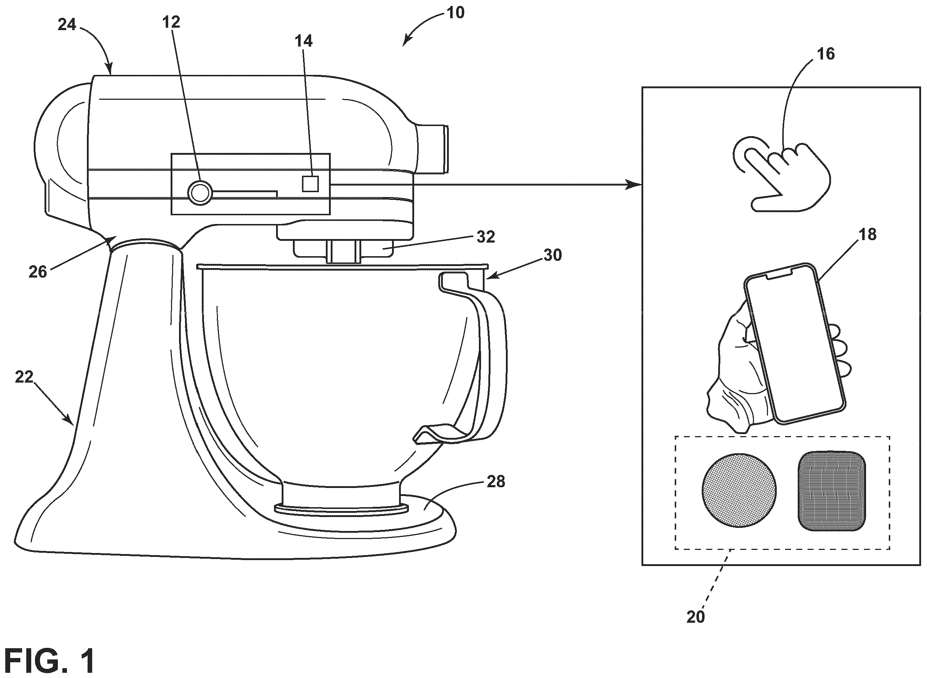

Turning now to the drawings and to Figure 1 in particular, a countertop appliance 10 is shown. The countertop appliance 10 has an actuator 12 for controlling an operating feature of the countertop appliance, such as motor speed, in the example shown in this invention. A confirmation interface 14 is an optional component provided on the countertop appliance 10 in accordance with the invention for allowing a user to confirm receipt of an actuator position signal received remotely by the countertop appliance 10. The confirmation interface 14 can be any number of suitable components for receiving at least one gesture from a user of the countertop appliance to indicate a positive or negative reaction to the receipt of a positioning signal for the actuator 12, including but not limited to a toggle button, a touch screen, and the like. As shown in Figure 1, the actuator 12 can be positioned by a user's hand 16 with direct physical contact with the actuator 12 to provide an indication to the actuator of a new setting for the actuator 12. It is also a feature of this invention that a remote signal can be provided to the actuator 12 from any number of remote locations. In the illustrative embodiment shown in Figure 1, the remote positioning signal for the actuator 12 can come from a smartphone 18 or a home automation device 20, such as an Alexa system or an Apple HomePod or the like.

The remote positioning signal for the actuator 12 coming from a smartphone 18 or a home automation device 20 may have a suitable interface thereon which allows a user to, for example, see the current position of the actuator 12 for the countertop appliance 10 and to provide either physical gestures in the case of a smartphone 18 or voice or other wireless commands to the home automation device 20.

The countertop appliance shown in Figure 1 is a typical stand mixer, but that other countertop appliances could be provided with the actuator 12 that can receive a physical input from the user's hand 16 or receiving remote positioning signals from the smartphone 18 or home automation device 20. Other countertop appliances that could be fitted with the actuator 12 and optional confirmation interface 14 include a blender, food processor, and the like, without departing from the scope of this invention.

By way of example and not by limitation, the countertop appliance 10 shown in Figure 1 comprises a base 22 that is pivotally connected at an upper portion thereof to a motor housing 24 via an upper portion26. The base 22, in the example shown in Figure 1, has a lower portion with a platform 28 that typically can receive a mixing bowl 30 placed thereon. The mixing bowl 30 can be any typical vessel for receiving foodstuffs to be mixed within the mixing bowl 30. The motor housing 24 typically includes a rotatable accessory mount 32 adapted to releasably receive various mixing accessories, such as beaters, blades, mixing hooks, kneaders, and other implements.

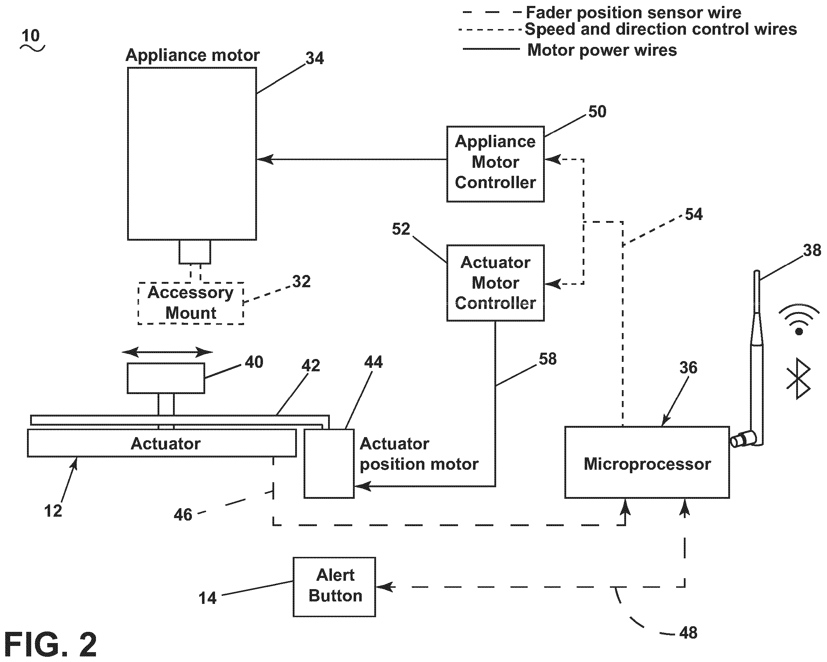

Turning to the schematic shown in Figure 2, additional detail for internal componentry carried within the countertop appliance 10 is shown. The componentry may be contained anywhere within, or associated with, the countertop appliance 10 including, but not limited to, within the base 22 or the motor housing 24 without departing from the scope of the invention. While countertop appliances such as that shown herein can have a number of operating criteria, the illustrative examples shown in Figures 1-2 use motor speed as an example criterion. Other operating criteria could be chosen without departing from the scope of the invention.

Figure 2 shows an appliance motor 34 in schematic form. It will be understood that this appliance motor is operably interconnected to the accessory mount 32, shown in Figure 1 but not shown in Figure 2, via suitable mechanical interconnection so that rotational motion created by the appliance motor 34 is imparted to the accessory mount 32 to perform desired food preparation operations with the countertop appliance 10. The particulars of the example schematic shown in Figure 2 will now be described. The focus of the invention is to allow for physical movement of the actuator 12 by both physical touch by a user's hand 16 and via remote signals, such as those transmitted by a smartphone 18 or a home automation device 20, or other devices (e.g., via Raspberry Pi, etc.). Other or different components could be used to accomplish the same function than those shown in Figure 2 and the example shown in Figure 2 should not be construed as limiting upon the scope of the invention.

A microprocessor 36 is shown in Figure 2 comprising a transceiver 38 capable of receiving a remote positioning signal for the actuator 12. Example icons for Wi-Fi and Bluetooth wireless signals are shown adjacent to the transceiver 38, but those protocols should be construed by way of example and not by limitation, as other wireless protocols and methods by which a remote signal could be received by the microprocessor 36 through the transceiver 38.

The various componentry of the countertop appliance 10 are shown in Figure 2 including the actuator 12 and the confirmation interface 14. The actuator 12 comprises a handle 40 mounted for movement with respect to an elongated housing 42 wherein the position of the handle 40 with respect to the elongated housing 42 is representative of an operating criterion of the appliance motor 34. The actuator 12 is provided with an actuator position motor 44 that is operably interconnected to the handle 40 by a suitable linkage whereby rotational movement of the actuator position motor 44 can impart movement of the handle 40 with respect to the elongated housing 42 of the actuator 12. The relative position of the handle 40 with respect to the elongated housing 42 is provided to the microprocessor 36 by an actuator position sensor 46.

The confirmation interface 14 is preferably switchable between at least two states: a first inactive state in which a disabled visual indication is provided to a user of the countertop appliance 10 and a second active state, in which a visual indication is provided to a user of the countertop appliance 10 to provide a call to action to interact with the confirmation interface 14. The confirmation interface 14 is preferably configured to allow for multiple gestures to be received from a user of the countertop appliance 10, including, but not limited to, a first gesture in which a user can provide a confirmation indication to the confirmation interface 14 representative of an intention that the user is confirming an action displayed by the confirmation interface 14, and a second gesture, in which a user can provide a cancel indication to the confirmation interface 14 representative of an interaction with the user has an intention to cancel the action displayed by the confirmation interface 14. The state of the confirmation interface is communicated to the microprocessor via the confirmation interface signal 48.

An appliance motor controller 50 and an actuator motor controller 52 are also operably interconnected with the microprocessor 36. The interconnection between the microprocessor 36 and the appliance motor controller 50 and the actuator motor controller 52 is shown generally by reference numeral 54. In this manner, upon issuance of the signal by the microprocessor 36 through the controller interconnection 54, to the appliance motor controller 50 and the actuator motor controller 52, an operating criterion of the appliance motor 34 and the actuator 12 can be set. For example, a signal from the microprocessor 36 through the controller interconnector 54 to the appliance motor controller 50 can provide a signal through a motor interconnection 56 to set operating criteria of the appliance motor 34, such as motor speed. In addition, a signal from the microprocessor 36 through the controller interconnector 54 to the actuator motor controller 52 can also provide a signal through an actuator interconnection 58 to set the position of the handle 40 with respect to the elongated housing 42 of the actuator 12. In this manner, whether a user manually updates the position of the handle 40 with respect to the elongated housing 42 of the actuator 12 or a remote device provides a signal via the transceiver 38 to the microprocessor 36, the position of the handle 40 with respect to the elongated housing 42 of the actuator 12 can have the currently set operating condition, such as motor speed, visually set on and visible from the exterior of the countertop appliance 10.

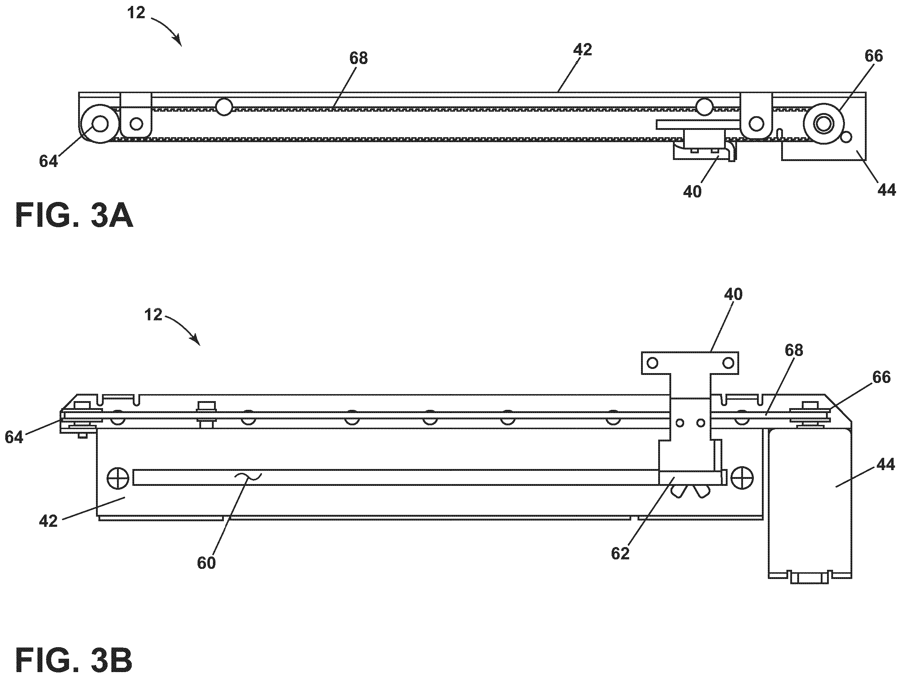

Turning now to Figures 3A-3B, 4A-4B and 5A-5B, particular embodiments of the actuator 12 that can have the position of the handle 40 set either physically by a user or remotely by communication from a smartphone 18 or an external home automation device 20, will now be described. The embodiments shown in these Figures are referenced with common reference numerals for components common between these Figures and with reference to the schematic diagram of Figure 2. In each of these embodiments, the handle 40 is mounted for movement with respect to the elongated housing 42 of the actuator 12 and the position of the handle 40 with respect to the elongated housing 42 is communicated in each case via the actuator position sensor 46 (not shown in the arrangements of Figures 3A-3B, 4A-4B and 5A-5B).

Turning to a first physical embodiment of the actuator 12 of Figures 3A-3B, the elongated housing 42 is provided with a slot 60 in which a flange 62 of the handle 40 is mounted for movement within the slot 60. A first pulley 64 and a second pulley 66 are mounted for rotational movement to opposite ends of the elongated housing 42 and extends along a longitudinal length of the slot 60. A belt 68 is disposed around the first pulley 64 and second pulley 66. A handle pulley is mounted to the handle 40 and has a corresponding inter-engagement with the belt 68, whereby movement of the belt 68 around the first pulley 64 and second pulley 66 imparts lateral movement of the handle 40 via the engagement of the belt 68 with the handle pulley. At least one of the first pulley 64 and second pulley 66 are operably interconnected to the actuator position motor 44 so that rotational movement provided by the actuator position motor 44 is imparted to the connected pulleys 64, 66 to move the belt 68, and thereby the handle pulley on the handle 40 to reset the position of the handle 40 in a controlled manner by the movement of the flange 62 of the handle 40 within the slot 60. One example of a suitable product embodying the actuator 12 shown in Figures 3A-3B is a PSM Series Motorized Slide Potentiometer available from Bourns Pro Audio.

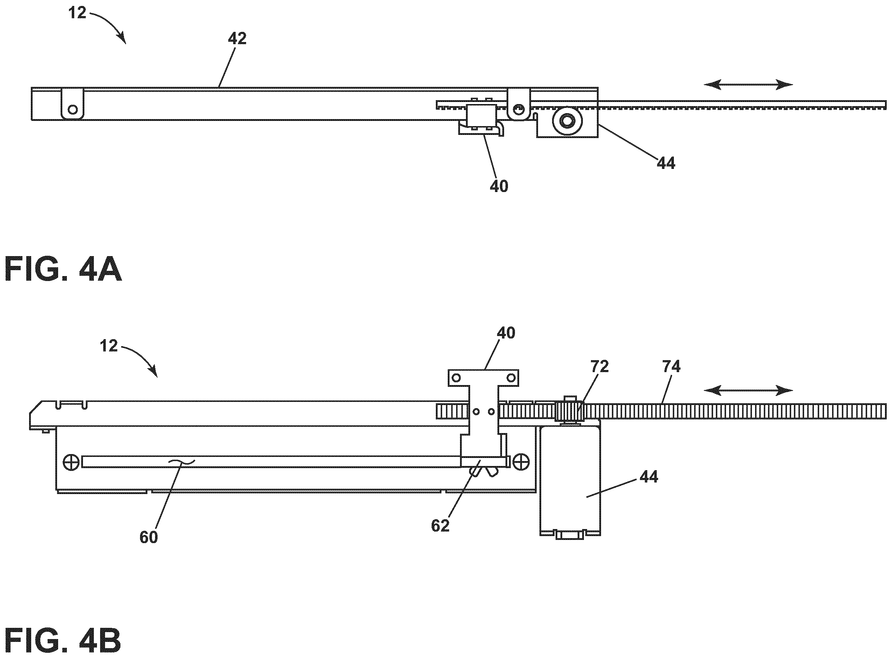

Turning to Figures 4A-4B, a second embodiment of the actuator 12 is shown with a slightly different configuration than that shown in the first embodiment of Figures 3A-3B. In the embodiment shown in Figures 4A-4B, a slot 60 is also provided in the elongated housing 42 and the handle 40 is also provided with a flange 62 mounted for movement along the path defined by the slot 60. The actuator position motor 44 is provided with a gear 72 on an output shaft thereof and a rack gear 74 is mounted with respect to the elongated housing for lateral movement as a result of engagement with the gear 72. A portion of the rack 74 is mounted to the handle 40 so that, as the gear 72 on the output shaft of the actuator position motor 44 rotates, the handle 40 travels laterally due to its affixation to the rack 74 in a path defined by the flange 62 within the path defined by the slot 60.

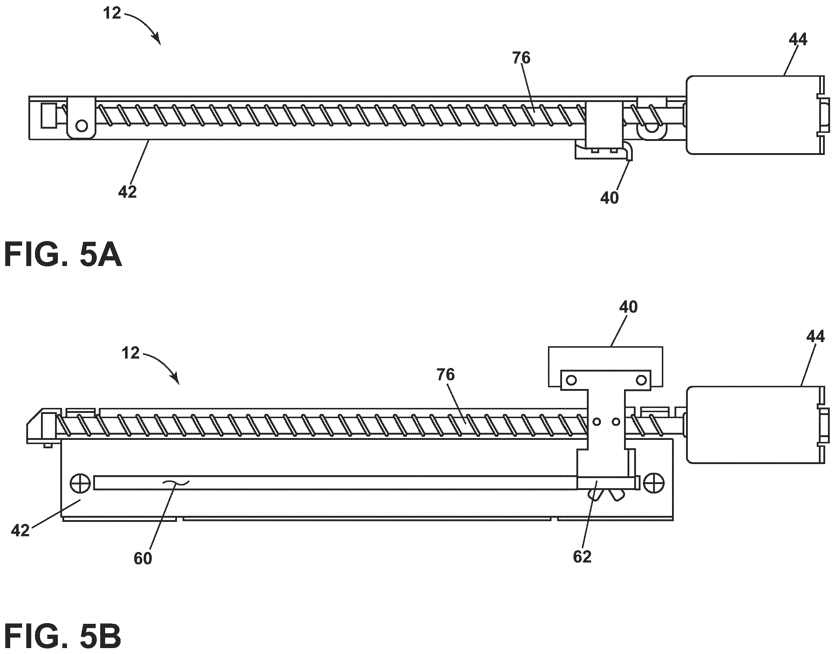

Turning to the embodiment of the actuator 12 of Figures 5A-5B, the handle 40 is also provided with a flange 62 located within at least a portion of the path defined by a slot 60 in the elongated housing 42. An output shaft of the actuator position motor 44 is provided with a worm gear 76 that has a spiral spur. The handle 40 has a corresponding interconnected number, such as a spur gear or pulley wheel having at least one tooth engaged within the spiral path defined by the worm gear 76. Thus, upon rotation of the output shaft of the actuator position motor 44 the worm gear 76 is provided with corresponding rotational movement which moves the handle laterally within the path defined by the slot 62 of the handle 40 as captured within the path defined by the slot 60.

With respect to the embodiments of the actuator 12 shown in Figures 3A-3B, 4A, 4B, and 5A-5B, the handle 40 can be physically moved with respect to the actuator position motor 44 by a user from the exterior of the countertop appliance 10. Conversely, the position of the handle 40 can also be adjusted by the rotation of the actuator position motor 44. In either event, the relative position of the handle 40 with respect to the elongated housing 42 of the actuator 12 is communicated to the microprocessor 36 by the actuator position sensor 46.

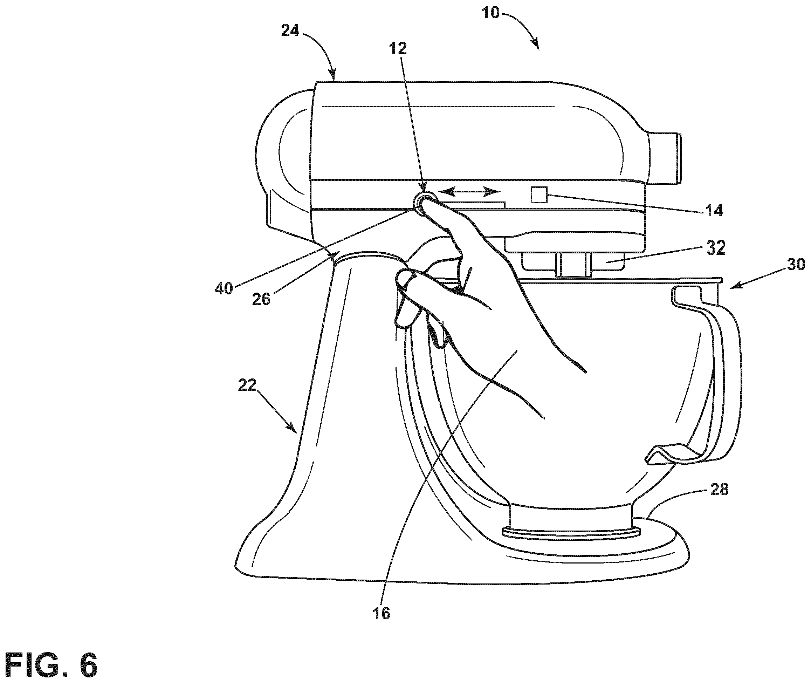

Examples of use of the countertop appliance 10 will now be provided with reference to Figures 6, 7A, 7B, 7C, 8A, 8B and 8C.

In a typical use, a user can provide an indication of an updated operational criteria of the appliance motor 34 (not shown in Figure 6) by adjusting the physical position with the user's hand shown in an illustrative example by reference 16 in Figure 6. By virtue of the adjustment of the physical location of the handle 40 with respect to the actuator 12, a signal is generated by the actuator position sensor 46 and communicated to the microprocessor 36. In the manner described above, the microprocessor sends a signal through the controller interconnection 54 to the appliance motor controller 50 and the actuator motor controller 52. Through motor interconnection 56, the new operational criteria of the appliance motor 34, such as motor speed, is updated and the countertop appliance 10 will operate with the new setting for the updated operational criteria.

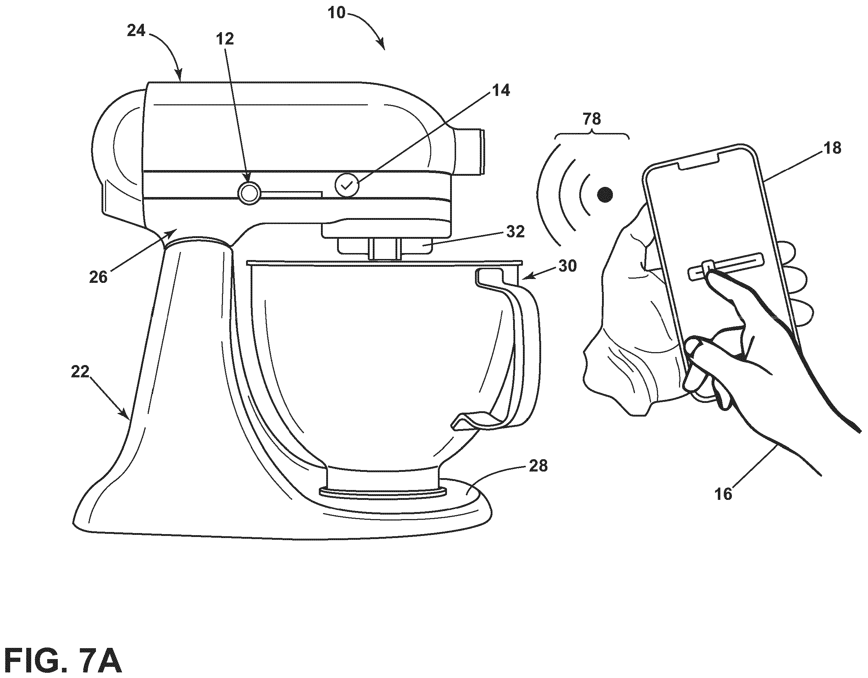

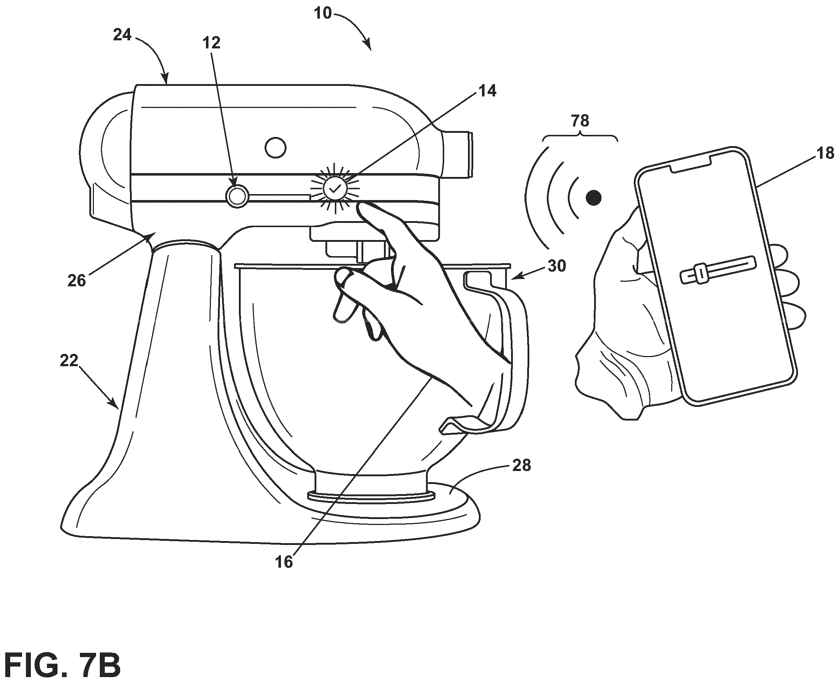

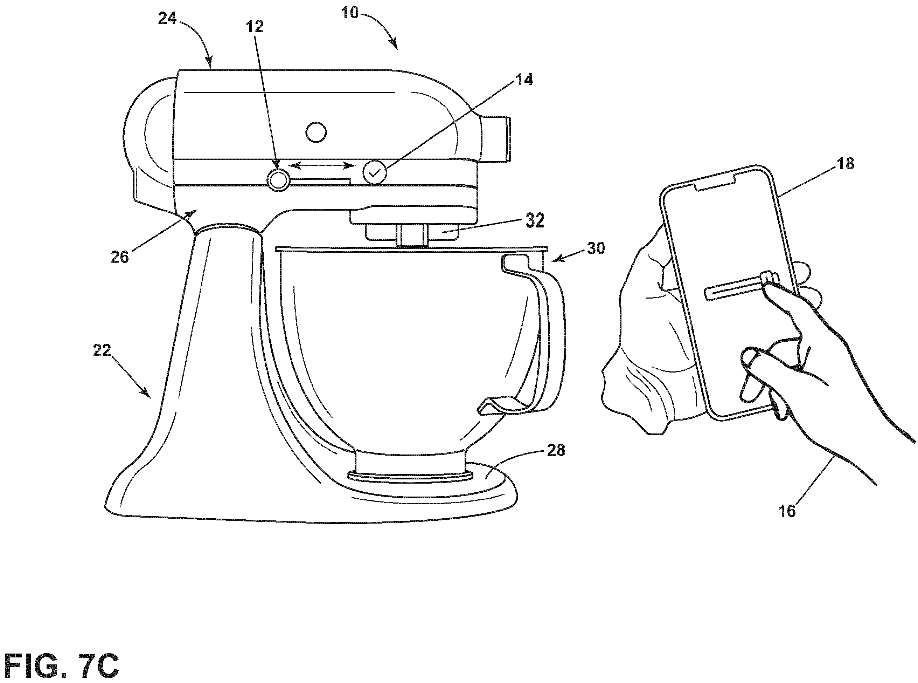

Turning to the embodiment of Figure 7A and 7B, a user (shown in an illustrative example by a user's hand 16), is shown updating a suitable interface on a smartphone 18 representative of the actuator 12 on the countertop appliance. With a suitable application programming interface resident on the smartphone device 18, a wireless signal, shown by example with reference numeral 78, is emitted to the countertop appliance as shown in Figure 7A. Turning to Figure 7B, an optional step is shown in which the confirmation interface 14 is placed into an active state indicating to the user that a user adjacent to the countertop appliance that a remote signal has been received to update the desired operational criteria of the countertop appliance, such as motor speed. A user can then provide one or more of a plurality of gestures to the confirmation interface 14, such as to confirm the updated operational criteria, cancel the updated operational criteria, or other updates to the microprocessor 36 through the confirmation interface 14. Turning to Figure 7C, if a user has updated the operational criteria of the countertop appliance via the smartphone device 18, and provided the optional acceptance of the updated operational criteria via the confirmation interface 14, the physical position of the handle 40 of the actuator 12 will move to reflect the updated setting received via the smartphone device 18.

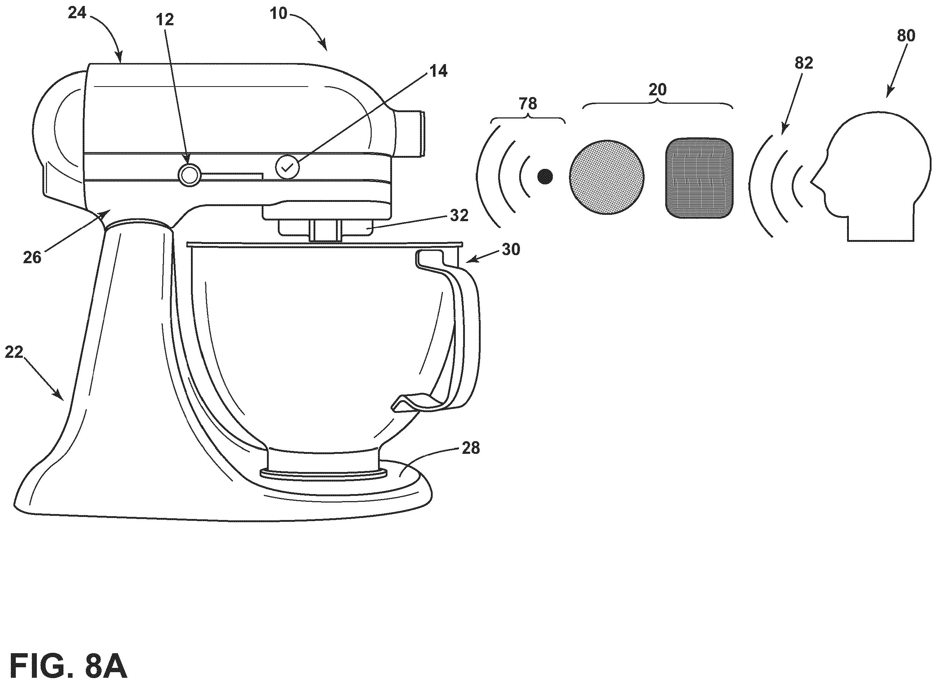

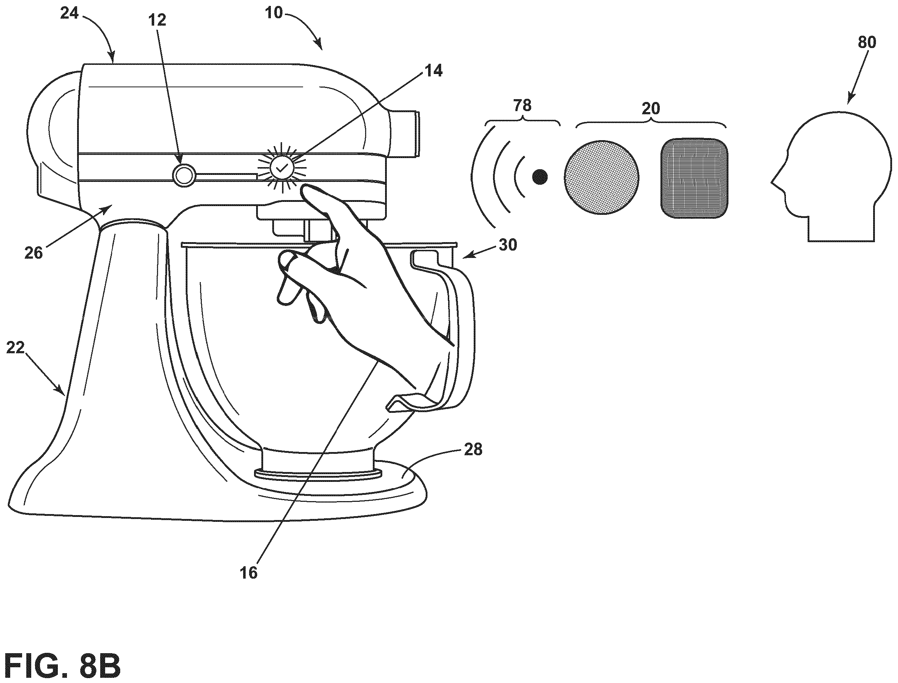

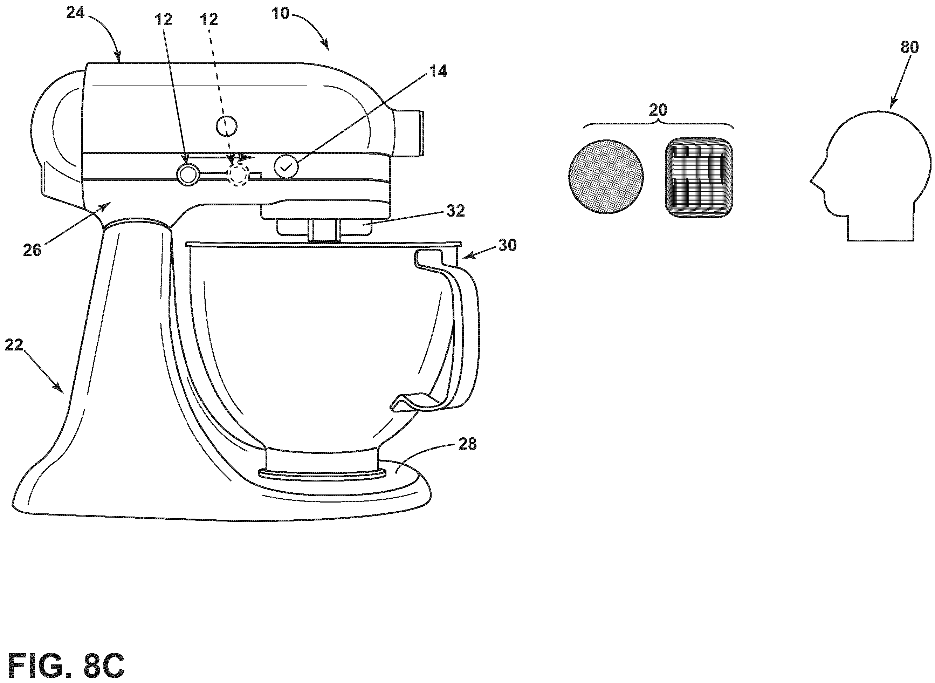

Turning to Figures 8A-8C, a similar operation to that illustrated with respect to Figure 7A-7C is provided except that a user 80 can issue a voice command 82 via a home automation device 20 which can thereby emit a wireless signal 78 to the countertop appliance 10. Examples of voice commands could be as simple as "speed faster" or "speed slower" or appliance off" and the like. Definitions of these commands could be set via a suitable application paired with the home automation device 20. In an optional confirmation step shown in Figure 8B similar to that described with respect to Figure 7B, the confirmation interface 14 could be set to an active state indicating to a user to provide a gesture representative of an acceptance or cancellation or other operational command as defined by an application programming interface interconnected with the countertop appliance 10 or home automation device 20. As shown in Figure 8C, if a wireless signal 78 has been received via a home automation device 20 and confirmed by the optional step as described with respect to Figure 8B, the physical position of the handle 40 with respect to the actuator 12 will move with respect to the actuator 12 to the desired updated position representative of the command received by the countertop appliance 10.

To the extent not already described, the different features and structures of the various embodiments of the present disclosure may be used in combination with each other as desired. That one feature may not be illustrated in all of the embodiments is not meant to be construed that it cannot be but is done for brevity of description. Thus, the various features of the different embodiments may be mixed and matched as desired to form new embodiments, whether or not the new embodiments are expressly described. Further, while the invention has been specifically described in connection with certain specific embodiments thereof, it is to be understood that this is by way of illustration and not of limitation.

While aspects of the present invention have been specifically described in connection with certain specific embodiments thereof, it is to be understood that this is by way of illustration and not of limitation. Reasonable variation and modification are possible within the scope of the present invention which is defined in the appended claims.

## Claims

1. A countertop appliance (10) comprising:
a rotatable attachment mount (32);
a motor (34) having an output shaft operably connected to the attachment mount (32) and configured to provide rotational motion to the attachment mount (32) when powered; and
an actuator (12) operably interconnected with the motor (34), the actuator (12) having a handle (40) movable along a path,
the handle (40) being accessible from the exterior of the countertop appliance (10) by a user, the actuator (12) further comprising a positioning assembly configured to impart movement to the handle (40) along the path upon receipt of a position signal by the positioning assembly;
**characterized in that** the countertop appliance (10) further comprises a wireless communication interface (38) operably interconnected with the positioning assembly, the wireless communication interface (38) being capable of receiving the position signal for the actuator (12).

2. The countertop appliance (10) of claim 1, wherein, upon receipt of the position signal by the positioning assembly or upon physical movement of the handle (40) by a user, the handle (40) is configured to move between a plurality of positions.

3. The countertop appliance (10) of claim 2, wherein, upon movement of the handle (40), the actuator (12) is configured to generate and/or to send to the motor (34) a signal representative of a speed of the output of the motor (34).

4. The countertop appliance (10) of any one of claims 1 to 3, further comprising:
a housing (24) comprising the rotatable attachment mount (32); and
a base (22) having a lower surface for resting on a work surface and an upper portion (26), the lower surface having an extension (28) upon which a mixing bowl (30) can be placed for food preparation operations performed by the countertop appliance (10),
wherein the actuator (12) is mounted to at least one of the base (22) or the housing (24), optionally wherein the housing (24) is movable with respect to the base (22) between at least a first position wherein the attachment mount (32) is juxtaposed with the extension (28) on the lower surface of the base (22), and a second position wherein the attachment mount (32) is moved away from the extension (28) on the lower surface of the base (22).

5. The countertop appliance (10) of any one of claims 1 to 4, further comprising:
a tactile interface (14) accessible by a user from the exterior of the countertop appliance (10), wherein the tactile interface (14) is operably interconnected between the actuator (12) and the motor (34); and
a visual indicator associated with the tactile interface (14), wherein the visual indicator is controllable between a first inactive state and a second active state.

6. The countertop appliance (10) of claim 5, wherein a signal interrupt prevents any position signals from affecting the position of the handle (40) along the path when the visual indicator of the tactile interface (14) is set to the second active state and/or
wherein the tactile interface (14) is configured to return the visual indicator to the first inactive state upon receipt of a first gesture from a user and any pending position signals are processed by the actuator (12) and/or upon receipt of a second gesture from a user and any pending position signals are canceled by the actuator (12).

7. The countertop appliance (10) of any one of claims 1 to 6, wherein the actuator (12) comprises an elongated housing (42) having a first end and a second end and the handle (40) is mounted for movement to the elongated housing (42) between the first and second ends thereof,
optionally wherein the handle (40) includes at least one of a flange (62) and a slot (60), and the elongated housing (42) includes the other of the flange (62) and a slot (60), and the flange (62) is mounted for slidable movement within the slot (60) to define the path.

8. The countertop appliance (10) of any one of claims 1 to 7, wherein the positioning assembly comprises a positioning motor (44) controllable by the position signal, and an output of the positioning motor (44) is operably interconnected to the handle (40) of the actuator (12) to impart movement thereto representative of the position signal and/or wherein the countertop appliance (10) further comprises a microprocessor (36) and an actuator position sensor (46) configured to communicate to the microprocessor (36) a relative position of the handle (40) with respect to the elongated housing (42).

9. The countertop appliance (10) of claims 7 and 8, wherein the output of the positioning motor (44) further comprises a gear (72), the elongated housing (42) comprises a belt (68) mounted for movement imparted from rotation of the gear (72) by the positioning motor (44), and movement of the belt (68) imparts slidable movement of the handle (40) with respect to the elongated housing (42) and/or
wherein the output of the positioning motor (44) further comprises a gear (72) rotatable by the positioning motor (44) and the handle (40) further comprises a rack gear (74) engaged with the gear (72) of the positioning motor (44), wherein rotation of the positioning motor (44) gear imparts lateral movement of the handle (40) with respect to the elongated housing (42) and/or
wherein the output of the positioning motor (44) further comprises a worm gear (76) extending along the general direction of the elongated housing (42) and the handle (40) further comprises a gear (72) engaged with the worm gear (76), wherein rotation of the positioning motor worm gear (76) imparts lateral movement of the handle (40) with respect to the elongated housing (42).

10. The countertop appliance (10) of any one of claims 1 to 9, wherein the path along which the handle (40) moves is linear or arcuate and/or
wherein the wireless communication interface (38) is a transceiver according to at least one of WiFi or Bluetooth communication protocols and/or
wherein the countertop appliance (10) comprises a stand mixer and the attachment mount is adapted to receive a mixing accessory.

11. The countertop appliance (10) of any one of claims 1 to 10, wherein the elongated housing (42) is provided with a slot (60) in which a flange (62) of the handle (40) is mounted for movement within the slot (60), wherein a first pulley (64) and a second pulley (66) are mounted for rotational movement to opposite ends of the elongated housing (42) and extends along a longitudinal length of the slot (60), wherein a belt (68) is disposed around the first pulley (64) and the second pulley (66), wherein a handle pulley is mounted to the handle (40) and has an inter-engagement with the belt (68) and wherein at least one of the first pulley (64) and the second pulley (66) is operably interconnected to the actuator positioning motor (44).

12. The countertop appliance (10) of any one of claims 1 to 11, wherein a slot (60) is provided in the elongated housing (42), wherein the handle (40) is provided with a flange (62) mounted for movement along the path defined by the slot (60), wherein the actuator positioning motor (44) is provided with a gear (72) on an output shaft thereof, wherein a rack gear (74) is mounted with respect to the elongated housing (42) and wherein a portion of the rack gear (74) is mounted to the handle (40).

13. The countertop appliance (10) of any one of claims 1 to 12, wherein the handle (40) is provided with a flange (62) located within at least a portion of the path defined by a slot (60) in the elongated housing (42), wherein an output shaft of the actuator positioning motor (44) is provided with a worm gear (76) and wherein the handle (40) has a member interconnected to the worm gear (76),
optionally wherein the worm gear (76) has a spiral spur and the member of the handle (40) interconnected with the worm gear (76) has as a spur gear or a pulley wheel having at least one tooth engaged within the spiral spur of the worm gear (76).

14. A system comprising:
the countertop appliance (10) of any one of claims 1 to 13; and
a remote controller capable of generating the position signal for the actuator (12) of the countertop appliance (10) and of transmitting the position signal to the wireless communication interface (38) of the countertop appliance (10),
wherein the remote controller includes a handheld device and/or a smartphone (18) and/or a home automation device (20) and/or a virtual assistant such as Amazon Alexa and/or a smart speaker such as Apple HomePod and/or a small computer such as Raspberry Pi.

15. A method for controlling the countertop appliance (10) of any one of claims 1 to 13, the method comprising the steps of:
moving the handle (40) between a plurality of positions upon receipt of the position signal by the positioning assembly or upon physical movement of the handle (40) by a user; and
generating accordingly a signal representative of a speed of the output shaft of the motor (34).

## Patentansprüche

1. Arbeitsplattengerät (10), umfassend:
eine drehbare Befestigungshalterung (32);
einen Motor (34), der eine Abtriebswelle aufweist, die funktional mit der Befestigungshalterung (32) verbunden ist, und ausgestaltet ist, um bei Stromzufuhr eine Rotationsbewegung auf die Befestigungshalterung (32) aufzubringen; und
einen Aktuator (12), der funktional mit dem Motor (34) verbunden ist, wobei der Aktuator (12) einen Griff (40) aufweist, der entlang einer Bahn bewegbar ist, wobei der Griff (40) von der Außenseite des Arbeitsplattengeräts (10) für einen Benutzer zugänglich ist,
wobei der Aktuator (12) ferner eine Positionierungsbaugruppe aufweist, die ausgestaltet ist, um bei Empfang eines Positionssignals durch die Positionierungsbaugruppe eine Bewegung auf den Griff (40) entlang der Bahn aufzubringen; und
**dadurch gekennzeichnet, dass** das Arbeitsplattengerät (10) ferner eine drahtlose Kommunikationsschnittstelle (38) aufweist, die funktional mit der Positionierungsbaugruppe verbunden ist, wobei die drahtlose Kommunikationsschnittstelle (38) in der Lage ist, das Positionssignal für den Aktuator (12) zu empfangen.

2. Arbeitsplattengerät (10) nach Anspruch 1, wobei, bei Empfang des Positionssignals durch die Positionierungsbaugruppe oder bei physischer Bewegung des Griffs (40) durch einen Benutzer, der Griff (40) ausgestaltet ist, um sich zwischen einer Mehrzahl von Positionen zu bewegen.

3. Arbeitsplattengerät (10) nach Anspruch 2, wobei der Aktuator (12) ausgestaltet ist, um bei Bewegung des Griffs (40) ein Signal, das einer Drehzahl des Ausgangs des Motors (34) entspricht, zu erzeugen und/oder an den Motor (34) zu senden.

4. Arbeitsplattengerät (10) nach einem der Ansprüche 1 bis 3, ferner umfassend:
ein Gehäuse (24), das die drehbare Befestigungshalterung (32) beinhaltet; und
eine Basis (22) mit einer Unterseite zum Aufstellen auf eine Arbeitsfläche und einem oberen Bereich (26), wobei die Unterseite eine Verlängerung (28) aufweist, auf der eine Rührschüssel (30) platziert werden kann, um mittels des Arbeitsplattengeräts (10) Lebensmittelzubereitungsvorgänge durchführen zu können,
wobei der Aktuator (12) an mindestens einem von der Basis (22) oder dem Gehäuse (24) montiert ist, wobei optional das Gehäuse (24) relativ zur Basis (22) zwischen mindestens einer ersten Position, in der sich die Befestigungshalterung (32) gegenüberliegend zu der Verlängerung (28) an der Unterseite der Basis (22) befindet, und einer zweiten Position bewegbar ist, in der die Befestigungshalterung (32) von der Verlängerung (28) an der Unterseite der Basis (22) wegbewegt ist.

5. Arbeitsplattengerät (10) nach einem der Ansprüche 1 bis 4, ferner umfassend:
eine taktile Schnittstelle (14), die für einen Benutzer von der Außenseite des Arbeitsplattengeräts (10) zugänglich ist, wobei die taktile Schnittstelle (14) funktional zwischen dem Aktuator (12) und dem Motor (34) verbunden ist; und
einen visuellen Indikator, der mit der taktilen Schnittstelle (14) in Beziehung steht, wobei der visuelle Indikator zwischen einem ersten inaktiven Zustand und einem zweiten aktiven Zustand steuerbar ist.

6. Arbeitsplattengerät (10) nach Anspruch 5, wobei eine Signalunterbrechung verhindert, dass sich Positionssignale auf die Position des Griffs (40) entlang der Bahn auswirken, wenn der visuelle Indikator der taktilen Schnittstelle (14) in den zweiten aktiven Zustand gesetzt ist und/oder
wobei die taktile Schnittstelle (14) ausgestaltet ist, um den visuellen Indikator bei Empfang einer ersten Geste von einem Benutzer in den ersten inaktiven Zustand zurückzusetzen und ausstehenden Positionssignale durch den Aktuator (12) verarbeitet werden und/oder bei Empfang einer zweiten Geste von einem Benutzer und ausstehenden Positionssignale durch den Aktuator (12) gelöscht werden.

7. Arbeitsplattengerät (10) nach einem der Ansprüche 1 bis 6, wobei der Aktuator (12) ein längliches Gehäuse (42) mit einem ersten Ende und einem zweiten Ende aufweist, und der Griff (40) an dem länglichen Gehäuse (42) für eine Bewegung zwischen dem erstem und dem zweitem Ende davon montiert ist,
wobei optional der Griff (40) mindestens eines von einem Flansch (62) und einem Schlitz (60) aufweist, und das längliche Gehäuse (42) das andere von dem Flansch (62) und dem Schlitz (60) aufweist, und der Flansch (62) für eine Gleitbewegung in dem Schlitz (60) montiert ist, um die Bahn zu definieren.

8. Arbeitsplattengerät (10) nach einem der Ansprüche 1 bis 7, wobei die Positionierungsbaugruppe einen Positionierungsmotor (44) umfasst, der durch das Positionssignal steuerbar ist, und ein Ausgang des Positionierungsotors (44) funktional mit dem Griff (40) des Aktuators (12) gekoppelt ist, um diesen gemäß dem Positionssignal in Bewegung zu versetzen und/oder
wobei das Arbeitsplattengerät (10) ferner einen Mikroprozessor (36) und einen Aktuator-Positionssensor (46) aufweist, der ausgestaltet ist, um dem Mikroprozessor (36) eine relative Position des Griffs (40) in Bezug auf das längliche Gehäuse (42) mitzuteilen.

9. Arbeitsplattengerät (10) nach den Ansprüchen 7 und 8, wobei der Ausgang des Positionierungsmotors (44) ferner ein Zahnrad (72) aufweist, das längliche Gehäuse (42) einen Riemen (68) aufweist, der montiert ist, um mittels Rotation des Zahnrads (72) durch den Positionierungsmotor (44) in Bewegung versetzt zu werden, und durch die Bewegung des Riemens (68) eine Gleitbewegung des Griffs (40) in Bezug auf das längliche Gehäuse (42) bewirkt wird und/oder
wobei der Ausgang des Positionierungsmotors (44) ferner ein Zahnrad (72) aufweist, das mittels des Positionierungsmotors (44) in Rotation versetzt wird, und der Griff (40) ferner eine Zahnstange (74) aufweist, die mit dem Zahnrad (72) des Positionierungsmotors (44) in Eingriff steht, wobei mittels Rotation des Zahnrads des Positionierungsmotors (44) eine laterale Bewegung des Griffs (40) in Bezug auf das längliche Gehäuse (42) bewirkt wird und/oder
wobei der Ausgang des Positionierungsmotors (44) ferner eine Schneckenwelle (76) aufweist, die sich entlang der allgemeinen Richtung des länglichen Gehäuses (42) erstreckt, und der Griff (40) ferner ein Getriebe (72) aufweist, das mit der Schneckenwelle (76) in Eingriff steht, wobei mittels Rotation der Schneckenwelle (76) des Positionierungsmotors eine laterale Bewegung des Griffs (40) in Bezug auf das längliche Gehäuse (42) bewirkt wird.

10. Arbeitsplattengerät (10) nach einem der Ansprüche 1 bis 9, wobei die Bahn, entlang dessen sich der Griff (40) bewegt, geradlinig oder gebogen ist und/oder
wobei die drahtlose Kommunikationsschnittstelle (38) ein Transceiver basierend auf mindestens einem der Kommunikationsprotokolle WiFi oder Bluetooth ist, und/oder
wobei das Arbeitsplattengerät (10) einen Standmixer umfasst und die Befestigungshalterung (32) ausgestaltet ist, um ein Misch-Zubehörteil aufzunehmen.

11. Arbeitsplattengerät (10) nach einem der Ansprüche 1 bis 10, wobei das längliche Gehäuse (42) mit einem Schlitz (60) versehen ist, in dem ein Flansch (62) des Griffs (40) für eine Bewegung innerhalb des Schlitzes (60) montiert ist, wobei eine erste Riemenscheibe (64) und eine zweite Riemenscheibe (66) für eine Rotationsbewegung an gegenüberliegenden Enden des länglichen Gehäuses (42) montiert sind, und sich entlang einer Längsausdehnung des Schlitzes (60) erstreckt, wobei ein Riemen (68) um die erste Riemenscheibe (64) und die zweite Riemenscheibe (66) angeordnet ist, wobei eine Griffrolle an dem Griff (40) angebracht ist und in Eingriff mit dem Riemen (68) steht, und wobei mindestens eine von der ersten Riemenscheibe (64) und der zweiten Riemenscheibe (66) funktional mit dem Aktuator-Positionierungsmotor (44) verbunden ist.

12. Arbeitsplattengerät (10) nach einem der Ansprüche 1 bis 11, wobei ein Schlitz (60) in dem länglichen Gehäuse (42) vorgesehen ist, wobei der Griff (40) mit einem Flansch (62) versehen ist, der für eine Bewegung entlang der Bahn montiert ist, die durch den Schlitz (60) definiert ist, wobei der Aktuator-Positionierungsmotor (44) an seiner Abtriebswelle mit einem Zahnrad (72) versehen ist, wobei eine Zahnstange (74) in Bezug auf das längliche Gehäuse (42) montiert ist, und wobei ein Bereich der Zahnstange (74) an dem Griff (40) angebracht ist.

13. Arbeitsplattengerät (10) nach einem der Ansprüche 1 bis 12, wobei der Griff (40) mit einem Flansch (62) versehen ist, der in mindestens einem Bereich der Bahn angeordnet ist, die durch einen Schlitz (60) in dem länglichen Gehäuse (42) definiert ist, wobei eine Abtriebswelle des Aktuator-Positionierungsmotors (44) mit einer Schneckenwelle (76) versehen ist und wobei der Griff (40) ein mit der Schneckenwelle (76) gekoppeltes Element aufweist,
wobei optional die Schneckenwelle (76) eine spiralförmige Verzahnung aufweist und das mit der Schneckenwelle (76) gekoppelte Element des Griffs (40) eine Verzahnung oder ein Schneckenrad mit mindestens einem Zahn aufweist, der mit der spiralförmigen Verzahnung der Schneckenwelle (76) eingreift.

14. System, umfassend:
das Arbeitsplattengerät (10) nach einem der Ansprüche 1 bis 13; und
eine Fernbedienung, die in der Lage ist, das Positionssignal für den Aktuator (12) des Arbeitsplattengeräts (10) zu erzeugen und das Positionssignal an die drahtlose Kommunikationsschnittstelle (38) des Arbeitsplattengeräts (10) zu übertragen,
wobei die Fernbedienung ein Handgerät und/oder ein Smartphone (18) und/oder ein Hausautomatisierungsgerät (20) und/oder einen virtuellen Assistenten, wie Amazon Alexa, und/oder einen intelligenten Lautsprecher, wie Apple HomePod, und/oder einen kleinen Computer, wie Raspberry Pi, umfasst.

15. Verfahren zum Steuern des Arbeitsplattengeräts (10) nach einem der Ansprüche 1 bis 13, wobei das Verfahren die folgenden Schritte umfasst:
Bewegen des Griffs (40) zwischen einer Mehrzahl von Positionen bei Empfang des Positionssignals durch die Positionierungsbaugruppe oder bei physischer Bewegung des Griffs (40) durch einen Benutzer; und
entsprechendes Erzeugen eines Signals, das eine Drehzahl der Abtriebswelle des Motors repräsentiert (34).

## Revendications

1. Appareil électroménager de paillasse (10) comprenant :
un montant de fixation (32) rotatif ;
un moteur (34) ayant un arbre de sortie fonctionnellement raccordé au montant de fixation (32) et configuré pour fournir un mouvement de rotation au montant de fixation (32) lorsqu'il est allumé ; et
un actionneur (12) fonctionnellement interconnecté au moteur (34), l'actionneur (12) ayant une poignée (40) mobile le long d'un trajet, la poignée (40) étant accessible depuis l'extérieur de l'appareil électroménager de paillasse (10) par un utilisateur,
l'actionneur (12) comprenant en outre un ensemble de positionnement configuré pour conférer un mouvement à la poignée (40) le long du trajet lors de la réception d'un signal de position par l'ensemble de positionnement ; et
**caractérisé en ce que** l'appareil électroménager de paillasse (10) comprend en outre une interface de communication sans fil (38) fonctionnellement interconnectée avec l'ensemble de positionnement, l'interface de communication sans fil (38) étant capable de recevoir le signal de position pour l'actionneur (12).

2. Appareil électroménager de paillasse (10) selon la revendication 1, dans lequel, lors de la réception du signal de position par l'ensemble de positionnement ou à l'issue d'un mouvement physique de la poignée (40) par un utilisateur, la poignée (40) est configurée pour se déplacer entre une pluralité de positions.

3. Appareil électroménager de paillasse (10) selon la revendication 2, dans lequel, lors d'un mouvement de la poignée (40), l'actionneur (12) est configuré pour générer et/ou pour envoyer au moteur (34) un signal représentatif d'une vitesse de la sortie du moteur (34).

4. Appareil électroménager de paillasse (10) selon l'une quelconque des revendications 1 à 3, comprenant en outre :
un logement (24) comprenant le montant de fixation (32) rotatif ; et
une base (22) ayant une surface inférieure pour reposer sur une surface de travail et une portion supérieure (26), la surface inférieure ayant une extension (28) sur laquelle un bol mélangeur (30) peut être placé pour des opérations de préparation alimentaire effectuées par l'appareil électroménager de paillasse (10),
dans lequel l'actionneur (12) est monté à au moins l'un de la base (22) ou du logement (24),
éventuellement dans lequel le logement (24) est mobile par rapport à la base (22) entre au moins une première position dans laquelle le montant de fixation (32) est juxtaposé avec l'extension (28) sur la surface inférieure de la base (22), et une seconde position dans laquelle le montant de fixation (32) est déplacé à l'opposé de l'extension (28) sur la surface inférieure de la base (22).

5. Appareil électroménager de paillasse (10) selon l'une quelconque des revendications 1 à 4, comprenant en outre :
une interface tactile (14) accessible par un utilisateur depuis l'extérieur de l'appareil électroménager de paillasse (10), dans lequel l'interface tactile (14) est fonctionnellement interconnectée entre l'actionneur (12) et le moteur (34) ; et
un indicateur visuel associé à l'interface tactile (14), dans lequel l'indicateur visuel peut être commandé entre un premier état inactif et un second état actif.

6. Appareil électroménager de paillasse (10) selon la revendication 5, dans lequel une interruption de signal empêche de quelconques signaux de position d'affecter la position de la poignée (40) le long du trajet lorsque l'indicateur visuel de l'interface tactile (14) est réglée sur le second état actif et/ou
dans lequel l'interface tactile (14) est configurée pour ramener l'indicateur visuel au premier état inactif lors de la réception d'un premier geste depuis un utilisateur et que tous signaux de position en attente sont traités par l'actionneur (12) et/ou lors de la réception d'un second geste de la part d'un utilisateur et que tous signaux de position en attente sont annulés par l'actionneur (12).

7. Appareil électroménager de paillasse (10) selon l'une quelconque des revendications 1 à 6, dans lequel l'actionneur (12) comprend un logement allongé (42) ayant une première extrémité et une seconde extrémité et la poignée (40) est montée pour un mouvement vers le logement allongé (42) entre ses première et seconde extrémité,
éventuellement dans lequel la poignée (40) inclut au moins l'une d'une collerette (62) et d'une fente (60), et le logement allongé (42) inclut l'autre de la collerette (62) et d'une fente (60), et la collerette (62) est montée pour un mouvement de coulissement à l'intérieur de la fente (60) pour définir le trajet.

8. Appareil électroménager de paillasse (10) selon l'une quelconque des revendications 1 à 7, dans lequel l'ensemble de positionnement comprend un moteur de positionnement (44) pouvant être contrôlé par le signal de position, et une sortie du moteur de positionnement (44) est fonctionnellement interconnectée à la poignée (40) de l'actionneur (12) pour conférer un mouvement à celui-ci représentatif du signal de position et/ou
dans lequel l'appareil électroménager de paillasse (10) comprend en outre un microprocesseur (36) et un capteur de position d'actionneur (46) configuré pour communiquer au microprocesseur (36) une position relative de la poignée (40) par rapport au logement allongé (42).

9. Appareil électroménager de paillasse (10) selon les revendications 7 et 8, dans lequel la sortie du moteur de positionnement (44) comprend en outre un engrenage (72), le logement allongé (42) comprend une courroie (68) montée pour un mouvement conféré depuis une rotation de l'engrenage (72) par le moteur de positionnement (44), et un mouvement de la courroie (68) confère un mouvement de coulissement de la poignée (40) par rapport au logement allongé (42) et/ou
dans lequel la sortie du moteur de positionnement (44) comprend en outre un engrenage (72) pouvant être mis en rotation par le moteur de positionnement (44) et la poignée (40) comprend en outre un engrenage à crémaillère (74) engagé avec l'engrenage (72) du moteur de positionnement (44), dans lequel une rotation de l'engrenage du moteur de positionnement (44) confère un mouvement latéral de la poignée (40) par rapport au logement allongé (42) et/ou
dans lequel la sortie du moteur de positionnement (44) comprend en outre un engrenage à vis sans fin (76) s'étendant le long de la direction générale du logement allongé (42) et la poignée (40) comprend en outre un engrenage (72) engagé avec l'engrenage à vis sans fin (76), dans lequel une rotation de l'engrenage à vis sans fin (76) du moteur de positionnement confère un mouvement latéral de la poignée (40) par rapport au logement allongé (42).

10. Appareil électroménager de paillasse (10) selon l'une quelconque des revendications 1 à 9, dans lequel le trajet le long duquel la poignée (40) se déplace est linéaire ou arqué et/ou
dans lequel l'interface de communication sans fil (38) est un émetteur-récepteur selon au moins l'un des protocoles de communication WiFi ou Bluetooth et/ou
dans lequel l'appareil électroménager de paillasse (10) comprend un mixeur sur pied et le montant de fixation est adapté pour recevoir un accessoire de mélange.

11. Appareil électroménager de paillasse (10) selon l'une quelconque des revendications 1 à 10, dans lequel le logement allongé (42) est pourvu d'une fente (60) dans laquelle une collerette (62) de la poignée (40) est montée pour un mouvement à l'intérieur de la fente (60), dans lequel une première poulie (64) et une seconde poulie (66) sont montées pour un mouvement de rotation vers des extrémités opposées du logement allongé (42) et s'étend le long d'une longueur longitudinale de la fente (60), dans lequel une courroie (68) est disposée autour de la première poulie (64) et de la seconde poulie (66), dans lequel une poulie de poignée est montée à la poignée (40) et présente un engagement mutuel avec la courroie (68) et dans lequel au moins l'une de la première poulie (64) et de la seconde poulie (66) est fonctionnellement interconnectée au moteur de positionnement d'actionneur (44).

12. Appareil électroménager de paillasse (10) selon l'une quelconque des revendications 1 à 11, dans lequel une fente (60) est prévue dans le logement allongé (42), dans lequel la poignée (40) est pourvue d'une collerette (62) montée pour un mouvement le long du trajet défini par la fente (60), dans lequel le moteur de positionnement d'actionneur (44) est pourvu d'un engrenage (72) sur son arbre de sortie, dans lequel un engrenage à crémaillère (74) est monté par rapport au logement allongé (42) et dans lequel une portion de l'engrenage à crémaillère (74) est montée à la poignée (40).

13. Appareil électroménager de paillasse (10) selon l'une quelconque des revendications 1 à 12, dans lequel la poignée (40) est pourvue d'une collerette (62) localisée à l'intérieur d'au moins une portion du trajet défini par une fente (60) dans le logement allongé (42), dans lequel un arbre de sortie du moteur de positionnement d'actionneur (44) est pourvu d'un engrenage à vis sans fin (76) et dans lequel la poignée (40) présente un élément interconnecté à l'engrenage à vis sans fin (76),
éventuellement dans lequel l'engrenage à vis sans fin (76) présente un ergot spiralé et l'élément de la poignée (40) interconnecté à l'engrenage à vis sans fin (76) présente un engrenage planétaire ou une roue de poulie ayant au moins une dent engagée à l'intérieur de l'ergot spiralé de l'engrenage à vis sans fin (76).

14. Système comprenant :
l'appareil électroménager de paillasse (10) selon l'une quelconque des revendications 1 à 13 ; et
un contrôleur distant capable de générer le signal de position pour l'actionneur (12) de l'appareil électroménager de paillasse (10) et de transmission du signal de position à l'interface de communication sans fil (38) de l'appareil électroménager de paillasse (10),
dans lequel le contrôleur distant inclut un dispositif portatif et/ou un smartphone (18) et/ou un dispositif d'automatisation domestique (20) et/ou un assistant virtuel tel qu'Amazon Alexa et/ou un haut-parleur intelligent tel qu'un Apple HomePod et/ou un petit ordinateur tel qu'un Raspberry Pi.

15. Procédé de commande de l'appareil électroménager de paillasse (10) selon l'une quelconque des revendications 1 à 13, le procédé comprenant les étapes consistant à :
déplacer la poignée (40) entre une pluralité de positions lors de la réception du signal de position par l'ensemble de positionnement ou à l'issue d'un mouvement physique de la poignée (40) par un utilisateur ; et
générer en conséquence un signal représentatif d'une vitesse de l'arbre de sortie du moteur (34).
